# EUROPÄISCHE PATENTSCHRIFT

(11) **EP 1 557 596 B1**
(45) Veröffentlichungstag und Bekanntmachung des Hinweises auf die Patenterteilung: **27.12.2006**
(21) Anmeldenummer: 04028394.7
(22) Anmeldetag: 01.12.2004
(51) Int. Cl.: F16J 15/32

(54) **Radialwellendichtring**
Radial lip seal
Joint à lèvre radiale

(30) Priorität: 21.01.2004 DE 102004002978
(43) Veröffentlichungstag der Anmeldung: 27.07.2005
(73) Patentinhaber: Carl Freudenberg KG, 69469 Weinheim (DE)
(72) Erfinder: Naszek, Attila, 6000 Kecskemet (HU); Rettig, Karl-Heinz, 69469 Weinheim (DE); Schreiner, Peter, 67117 Limburgerhof (DE)

(56) Entgegenhaltungen:
- DE-A- 2 351 767
- DE-A- 19 622 850

## Beschreibung

### Technisches Gebiet

Die Erfindung betrifft eine Radialwellendichtung zur Abdichtung zweier Medien mit zwei Radialwellendichtringen, die identisch ausgebildet und ineinander steckbar sind.

### Stand der Technik

Durch die DE 23 51 767 ist eine Wellendichtung zur Abdichtung zweier Medien mittels zweier Radialwellendichtringe bekannt, bei denen mindestens ein Dichtring ein im Querschnitt winkelförmiges Gehäuse aufweist, so dass die Dichtringe ineinander steckbar sind. Bei Dichtungen dieser Art kann zwischen den Dichtlippen ein Unterdruck bzw. ein Überdruck entstehen, so dass eine Entlüftung des von den Dichtringen gebildeten Raumes erforderlich wird. Aus diesem Grunde hat die bekannte Wellendichtung im Bereich der einander berührenden Gehäuseflächen beider Radialwellendichtringe radial und axial laufende Kanäle. Auf diese Weise wird eine Be- bzw. Entlüftung hergestellt. Die Dichtung hat jedoch insgesamt einen sehr aufwendigen Aufbau und beansprucht erheblichen Platz für Ihre Unterbringung.

Durch die DE 196 22 850 A1 ist eine Radialwellendichtung bekannt, die ebenfalls aus einem Doppellippen-Dichtring besteht. Hier werden zwei getrennte benachbarte einlippige Dichtringe verwendet. Die Dichtringe sind identisch ausgebildet und weisen zwei Einbuchtungen bzw. Aufweitungen auf, die aus elastomerischem Material gebildet sind und die miteinander einrasten können. Zwischen den Ringen ist ein Durchgang vorhanden, der den ringförmigen Hohlraum zwischen den Lippen mit der Umgebung verbindet. Auch diese Dichtung ist sehr aufwendig konstruiert und hat einen hohen Platzbedarf.

### Darstellung der Erfindung

Der Erfindung liegt die Aufgabe zugrunde, eine Radialwellendichtung zu erstellen mit der zwei Medien sicher voneinander getrennt werden können, die einfach in ihrem konstruktiven Aufbau und damit kostengünstig herstellbar ist und die darüber hinaus einen sehr geringen Platzbedarf beansprucht. Auch soll sie leicht zu montieren sein und eine verbundene Einheit ergeben.

Die Lösung der gestellten Aufgabe wird bei einer Radialwellendichtung der eingangs genannten Art erfindungsgemäß dadurch erreicht, dass die Radialwellendichtringe auf ihren zueinander gerichteten Flächen mit axial ausgerichteten Ringsegmenten versehen sind, die bei montierten Radialwellendichtringen kraft- und/oder formschlüssig ineinandergreifen. Durch diese Maßnahme wird eine sehr einfache Konstruktion vorgegeben und die Dichtringe können auf eine sichere Weise miteinander verbunden werden. Bevorzugt wird jeder Radialwellendichtring mit vier Ringsegmenten versehen von denen jeweils zwei sich diametral gegenüberliegen und mit gleichen Radien versehen sind, so dass beim Zusammstecken der Radialwellendichtringe die inneren Ringsegmente bzw. umgekehrt von den äußeren Ringsegmenten kraft- und/oder formschlüssig erfasst werden.

Die Ringsegmente kommen beim Zusammenstecken mit ihren radialen Flächen zur gegenseitigen Anlage, dabei liegen die radialen Außenflächen der inneren Ringsegmente an den radialen Innenflächen der äußeren Ringsegmente an. Bevorzugt werden die Flächen gleichgerichtet leicht konisch ausgebildet, so dass sie eine Schnappverbindung bilden. Der Konuswinkel beträgt etwa 5°.

Die Ringwellendichtringe bestehen jeweils aus einem Dichteinsatz und einem Tragkörper aus Metall mit einer äußeren Haftschicht aus einem Elastomer und einer nach innen gerichteten Dichtlippe. Dabei ist es günstig, wenn der Tragkörper im Querschnitt gesehen einen axialen und einen radialen Schenkel hat. Diese Schenkel können gleich lang sein. Der axiale Schenkel übernimmt die Aufgabe der Befestigung der Dichtung in der Öffnung eines Gehäuses oder dergleichen. Der radiale Schenkel dagegen dient zur Abstützung der Dichtlippe.

Die an den Dichtringen angebrachten Ringsegmente werden bevorzugt so ausgebildet, dass die äußeren Ringsegmente axial eine größere Länge haben als die inneren Ringsegmente. Dieses dient dem sicheren Zusammenstecken der Ringsegmente miteinander. Eine falsche Montage ist nicht möglich.

Dabei ist es günstig, wenn die Umfangslänge der jeweils nebeneinander liegenden Ringsegmente größer ist als der freie Abstand zwischen den Ringsegmenten. Diese Maßnahme wirkt sich insofern günstig aus, als bei der Montage der einzelnen Dichtringe zueinander in jedem Fall eine Entlüftungsöffnung zwischen den Ringsegmenten frei bleibt, und zwar auch dann, wenn die Dichtringe leicht verdreht. miteinander montiert sind.

Eine in jedem Falle sichere Entlüftung des von den Dichtringen eingefaßten Raumes wird dadurch sichergestellt, indem bevorzugt die äußeren Ringsegmente axial eine größere Länge haben als die inneren Ringsegmente Bei zusammengesteckten Dichtringen bleibt dann immer ein Spalt zwischen den Ringen erhalten, der der Entlüftung dient.

### Kurzbeschreibung der Zeichnung

Die beiliegende Zeichnung beinhaltet ein Ausführungsbeispiel der vorliegenden Erfindung.

Es zeigt:
- Fig. 1: einen Schnitt durch einen Dichtring,
- Fig. 2: eine Draufsicht auf die Innenseite des Dichtrings,
- Fig. 3: eine Ansicht der Innenseite eines Dichtrings mit eingefügten Ringsegmenten von beiden Dichtringen und
- Fig. 4: vergrößert einen Schnitt durch einen Teil zweier miteinander gekoppelter Dichtringe

### Ausführung der Erfindung

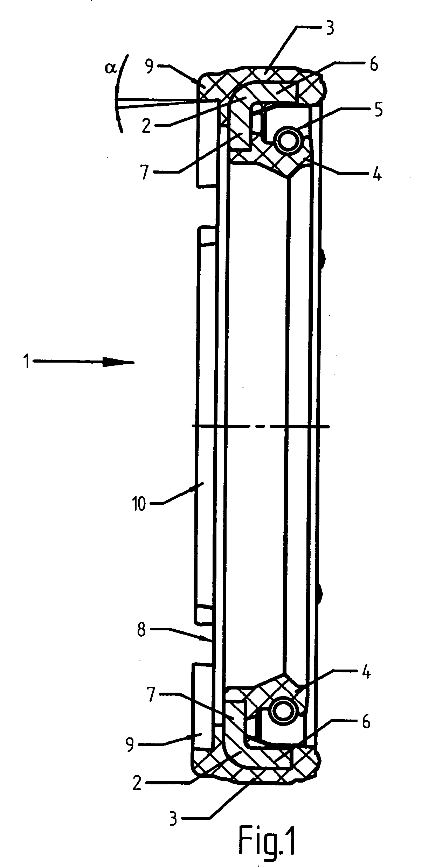

Die Figur 1 zeigt einen Dichtring 1 für die Radialwellendichtung. Der Radialwellendichtring 1 bildet einen Dichteinsatz, der aus einem Tragkörper 2 aus Metall mit einer äußeren Haftschicht 3 aus einem Elastomer und der radial nach innen gerichteten Dichtlippe 4 besteht. Die Dichtlippe 4 ist ebenfalls aus einem Elastomer hergestellt und wird durch die Ringfeder 5 noch zusätzlich an die nicht näher dargestellte Welle angepresst. Der Tragkörper 2 hat im Querschnitt gesehen einen axialen Schenkel 6 und einen radialen Schenkel 7. Im gezeigten Beispiel sind die Schenkel 6 und 7 gleich lang.

Die nach einer Montage von zwei Dichtringen innenliegende Fläche 8 des Dichtrings 1 ist mit vier Ringsegmenten 9 und 10 versehen, die bei der Montage der beiden Dichtringe 1 miteinander kraft und formschlüssig ineinandergreifen. Dabei sind zwei der Ringsegmente 9 radial nach außen versetzt und werden als äußere Ringsegmente 9 bezeichnet, während die inneren Ringsegmente 10 radial nach innen versetzt sind. Der zugehörige, in der Fig. 1 nicht dargestellte zweite Dichtring 1 ist exakt identisch ausgebildet und hat ebenfalls zwei äußere Ringsegmente 9 und zwei innere Ringsegmente 10.

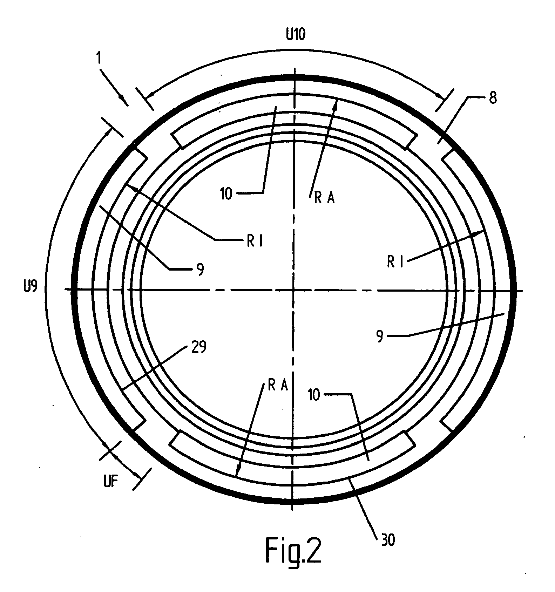

Die Figur 2 zeigt den Dichtring 1 in der Draufsicht auf die Innenfläche 8. Sichtbar wird hier die Anordnung der äußeren Ringsegmente 9 und der inneren Ringsegmente 10. Der Innenradius Ri der Ringsgegmente 9 entspricht dem Außenradius Ra der inneren Ringsegmente 10. Sichtbar wird in dieser Darstellung auch, dass die Umfangslänge U10 der Ringsgegmente 10 kleiner ist als die Umfangslänge U9 der Ringsegmente 9. Dabei sind jeweils die äußeren Ringsegmente 9 und die inneren Ringsegmente 10 benachbart zueinander angebracht. Auch ist sichtbar, dass der freie Abstand Uf zwischen den einzelnen Ringsegmenten 9 bzw. 10 oder auch 9 und 10 kleiner ist als die Umfangslängen U9 bzw. U10 der Ringsegmente 9 oder 10. Diese Anordnung und Ausbildung der Ringsegmente 9, 10 und der freien Abstände dazwischen hat zur Folge, dass bei der Montage der beiden Dichtringe 1 miteinander die äußeren Ringsegmente 9 des einen Dichtrings immer mit den inneren Ringsegmenten 10 des anderen Dichtrings in Eingriff kommen, und dass immer zwischen den Dichtringen im Bereich der freien Abstände Uf ein Entlüftungsspalt frei bleibt, und zwar auch dann, wenn die Dichtringe verdreht zueinander montiert wurden.

Die Umfangslängen U9 und U10 der Ringsegmente 9 und 10 überdecken Winkel von 85° und 75°. Diese Winkelwahl läßt eine leichte Verdrehung der Dichtringe von bis zu 10° bei ihrem Zusammenstecken zu, ohne daß die Entlüftung abgesperrt wird.

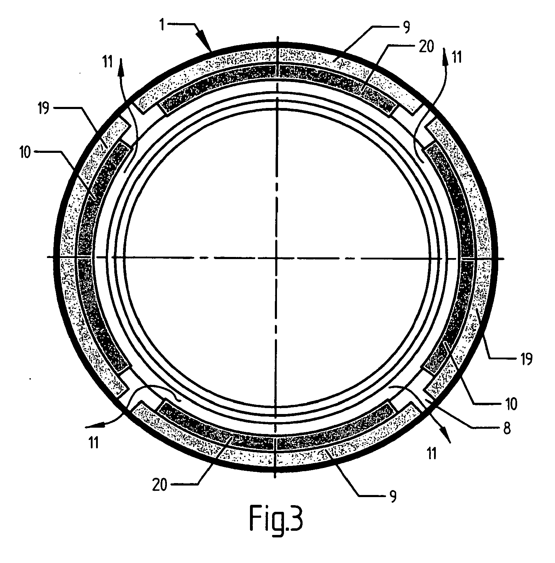

In der Figur 3 ist ebenfalls eine Draufsicht auf eine Innenfläche 8 eines Dichtrings 1 gezeigt, wobei in diesem Fall die Ringsegmente 19, 20 des zweiten Dichtrings 1 miteingezeichnet wurden. Es ist erkennbar, dass die freien Abstände zwischen den Ringsegmenten die mit den Pfeilen 11 angezeigten Entlüftungen freilassen.

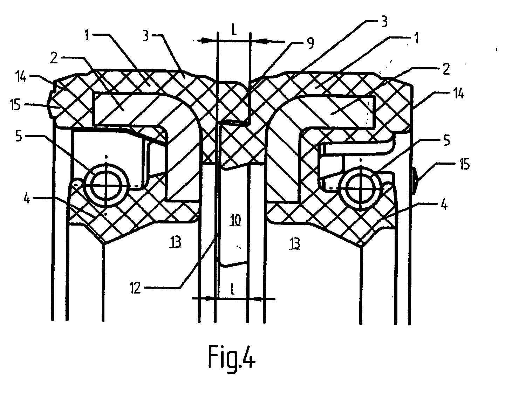

In der Figur 4 ist vergrößert die Radialwellendichtung aus zwei Dichtringen 1 im montierten Zustand gezeigt. Beide Dichtringe 1 sind identisch. Die äußeren Ringsegmente 9 greifen über die inneren Ringsegmente 10. Dabei ist die Länge L der äußeren Ringsegmente 9 geringfügig größer als die Länge I der innen liegenden Ringsegmente 10.

Die radialen Außenflächen 30 der inneren Ringsegmente 10 werden von den radialen Innenflächen 29 der äußeren Ringsegmente 9 umfaßt. Dabei sind sie mit einem Konuswinkel α von 5° ausgebildet. Dadurch entsteht eine Schnappverbindung, die beide Dichtringe 1 fest zusammenhält. Zwei Dichtringe 1 bilden dann eine Einheit.

Für die Lagebestimmung der Ringsegmente 9, 10 zueinander können an der Außenfläche 14 der Dichtringe 1 die Noppen 15 angebracht werden, die in vorgegebener Lage in Bezug zu den Ringsegmenten 9, 10 stehen können, so dass von außen sehr einfach die Lage der Ringsegmente 9, 10 zueinander sichtbar gemacht werken kann. Die Noppen 15 dienen in erster Linie der Abstandshaltung beim Stapeln oder Verpacken der Dichtringe 1. Im übrigen entspricht der Aufbau der Dichtringe 1 den in der Figur 1 geschilderten Aufbau aus Tragkörper 2, Haftschicht 3 und Dichtlippe 4 mit Ringfeder 5.

## Patentansprüche

1. Radialwellendichtung zur Abdichtung zweier Medien mit zwei Radialwellendichtringen, die identisch ausgebildet und ineinandersteckbar sind, **dadurch gekennzeichnet, dass** die Radialwellendichtringe (1) auf ihren zueinander gerichteten Flächen (8) mit axial ausgerichteten Ringsegmenten (9, 10) versehen sind, die bei montierten Ringwellendichtringen (1) kraft- und/oder formschlüssig ineinander greifen.

2. Radialwellendichtung nach Anspruch 1, **dadurch gekennzeichnet, dass** jeder Radialwellendichtring (1) vier Ringsegmente (9, 10) hat, von denen jeweils zwei sich diametral gegenüberliegende mit gleichen Radien (Ri, Ra) versehen sind, so dass beim Zusammenstecken der Radialwellendichtringe (1) die inneren Ringsegmente (10) von den äußeren Ringsegmenten (9) und/oder die äußeren von den inneren kraft- und/oder formschlüssig erfasst werden.

3. Radialwellendichtung nach einem der Ansprüche 1 oder 2, **dadurch gekennzeichnet, dass** die Ringsegmente (9, 10) mit ihren radialen Flächen (29, 30) aneinander liegen, wobei die radialen Außenflächen (30) der inneren Ringsegmente (10) mit den radialen Innenflächen (29) der äußeren Ringsegmente (9) eine Schnappverbindung bilden.

4. Radialwellendichtung nach Anspruch3, **dadurch gekennzeichnet, dass** die Schnappverbindung durch konische Ausgestaltungen der Außenflächen (30) und der Innenflächen (29) gebildet ist.

5. Radialwellendichtung nach Anspruch 4, **dadurch gekennzeichnet, dass** die Konuswinkel (α) der Flächen (29, 30) 5° betragen.

6. Radialwellendichtung nach einem der Ansprüche 1 bis 5, **dadurch gekennzeichnet, dass** die äußeren Ringsegmente (9) axial eine größere Länge (L) haben als die Länge (I) der inneren Ringsegmente (10).

7. Radialwellendichtung nach einem der Ansprüche 1 bis 6, **dadurch gekennzeichnet, dass** die Ringewellendichtringe (1) jeweils aus einem Dichteinsatz, einem Tragkörper (2) aus Metall mit einer äußeren Haftschicht (3) aus einem Elastomer und einer nach innen gerichteten Dichtlippe (4) aus einem Elastomer bestehen.

8. Radialwellendichtung nach einem der Ansprüche 1 bis 3, **dadurch gekennzeichnet, dass** der Tragkörper (2) im Querschnitt gesehen einen axialen und einen radialen Schenkel (6, 7) hat.

9. Radialwellendichtung nach Anspruch 4, **dadurch gekennzeichnet, dass** die Schenkel (6, 7) gleich lang sind.

10. Radialwellendichtung nach einem der Ansprüche 1 bis 6, **dadurch gekennzeichnet, dass** die Umfangslänge (U9, U10) der jeweils nebeneinander liegenden Ringsegmente (9, 10) größer ist als der freie Abstand (Uf) zwischen den freien Ringsgementen (9 und/oder 10).

11. Radialwellendichtung nach Ansprüch 10, **dadurch gekennzeichnet, dass** die Umfangslänge (U9) der äußeren Ringsegmente (9) einen Winkel von 85° überdeckt.

12. Radialwellendichtung nach einem der Ansprüche 10 oder 11, **dadurch gekennzeichnet, dass** die Unfangslänge der inneren Ringsegmente (10) einen Winkel von 75° überdeckt.

## Claims

1. Radial lip seal for sealing off two media, with two radial lip sealing rings which are of identical design and can be inserted one inside the other, **characterized in that** the radial lip sealing rings (1) are provided on their mutually facing surfaces (8) with ring segments (9, 10) which are oriented axially and, when the radial lip sealing rings (1) are fitted, engage non-positively and/or positively one inside the other.

2. Radial lip seal according to Claim 1, **characterized in that** each radial lip sealing ring (1) has four ring segments (9, 10) of which in each case two lying diametrically opposite each other are provided with the same radii (Ri, Ra), so that, when the radial lip sealing rings (1) are plugged together, the inner ring segments (10) are grasped by the outer ring segments (9) and/or the outer ring segments are grasped by the inner ring segments in a non-positive and/or positive manner.

3. Radial lip seal according to either of Claims 1 and 2, **characterized in that** the ring segments (9, 10) bear against each other by their radial surfaces (29, 30), the radial outer surfaces (30) of the inner ring segments (10) forming a snap connection with the radial inner surfaces (29) of the outer ring segments (9).

4. Radial lip seal according to Claim 3, **characterized in that** the snap connection is formed by conical configurations of the outer surfaces (30) and of the inner surfaces (29).

5. Radial lip seal according to Claim 4, **characterized in that** the cone angles (α) of the surfaces (29, 30) are 5°.

6. Radial lip seal according to one of Claims 1 to 5, **characterized in that** the outer ring segments (9) have a greater length (L) axially than the length (1) of the inner ring segments (10).

7. Radial lip seal according to one of Claims 1 to 6, **characterized in that** the radial lip sealing rings (1) each comprise a sealing insert, a metal supporting body (2) with an outer adhesive layer (3) made from an elastomer and an inwardly directed sealing lip (4) made from an elastomer.

8. Radial lip seal according to one of Claims 1 to 3, **characterized in that** the supporting body (2) has, as seen in cross section, an axial and a radial limb (6, 7).

9. Radial lip seal according to Claim 4, **characterized in that** the limbs (6, 7) are equal in length.

10. Radial lip seal according to one of Claims 1 to 6, **characterized in that** the circumferential length (U9, U10) of the ring segments (9, 10) situated next to each other in each case is larger than the free distance (Uf) between the free ring segments (9 and/or 10).

11. Radial lip seal according to Claim 10, **characterized in that** the circumferential length (U9) of the outer ring segments (9) covers an angle of 85°.

12. Radial lip seal according to either of Claims 10 and 11, **characterized in that** the circumferential length of the inner ring segments (10) covers an angle of 75°.

## Revendications

1. Joint à lèvre radial pour réaliser l'étanchéité de deux fluides avec deux bagues d'étanchéité à lèvres radiales qui sont réalisées de manière identique et qui peuvent être emboîtées l'une dans l'autre, **caractérisé en ce que** les bagues d'étanchéité à lèvres radiales (1) sont munies sur leurs faces en regard (8) de segments annulaires orientés axialement (9, 10) qui viennent en prise les uns dans les autres par engagement par force et/ou par coopération de forme lorsque les bagues d'étanchéité à lèvres radiales (1) sont montées.

2. Joint à lèvre radial selon la revendication 1, **caractérisé en ce que** chaque bague d'étanchéité à lèvre radiale (1) présente quatre segments annulaires (9, 10) dont deux diamétralement opposés sont pourvus de rayons identiques (Ri, Ra) de sorte que lors de l'emboîtement mutuel des bagues d'étanchéité à lèvres radiales (1), les segments annulaires intérieurs (10) soient saisis par engagement par force et/ou par coopération de forme par les segments annulaires extérieurs (9) et/ou que les segments annulaires extérieurs (9) soient saisis par engagement par force et/ou par coopération de forme par les segments annulaires intérieurs (10).

3. Joint à lèvre radial selon l'une quelconque des revendications 1 ou 2, **caractérisé en ce que** les segments annulaires (9, 10) s'appliquent les uns contre les autres avec leurs surfaces radiales (29, 30), les surfaces extérieures radiales (30) des segments annulaires intérieurs (10) formant avec les surfaces intérieures radiales (29) des segments annulaires extérieurs (9) une connexion par encliquetage.

4. Joint à lèvre radial selon la revendication 3, **caractérisé en ce que** la connexion par encliquetage est formée par des configurations coniques des surfaces extérieures (30) et des surfaces intérieures (29).

5. Joint à lèvre radial selon la revendication 4, **caractérisé en ce que** l'angle de conicité (α) des surfaces (29, 30) vaut 5°.

6. Joint à lèvre radial selon l'une quelconque des revendications 1 à 5, **caractérisé en ce que** les segments annulaires extérieurs (9) ont une plus grande longueur (L) dans la direction axiale que la longueur (I) des segments annulaires intérieurs (10).

7. Joint à lèvre radial selon l'une quelconque des revendications 1 à 6, **caractérisé en ce que** les bagues d'étanchéité à lèvres radiales (1) se composent chacune d'un insert d'étanchéité, d'un corps de support (2) en métal avec une couche d'adhésion extérieure (3) en élastomère et d'une lèvre d'étanchéité (4) orientée vers l'intérieur en élastomère.

8. Joint à lèvre radial selon l'une quelconque des revendications 1 à 3, **caractérisé en ce que** le corps de support (2), vu en section transversale, présente une branche axiale et une branche radiale (6, 7).

9. Joint à lèvre radial selon l'une quelconque des revendication 4, **caractérisé en ce que** les branches (6, 7) sont de même longueur.

10. Joint à lèvre radial selon l'une quelconque des revendications 1 à 6, **caractérisé en ce que** la longueur périphérique (U9, U10) des segments annulaires (9, 10) adjacents est supérieure à la distance libre (Uf) entre les segments annulaires libres (9 et/ou 10).

11. Joint à lèvre radial selon la revendication 10, **caractérisé en ce que** la longueur périphérique (U9) des segments annulaires extérieurs (9) couvre un angle de 85°.

12. Joint à lèvre radial selon l'une quelconque des revendications 10 ou 11, **caractérisé en ce que** la longueur périphérique des segments annulaires intérieurs (10) couvre un angle de 75°.
